Europäisches Patentamt

European Patent Office

Office européen des brevets

(19)

(11) **EP 1 113 247 A1**

(12) **DEMANDE DE BREVET EUROPEEN**

(43) Date de publication:
**04.07.2001 Bulletin 2001/27**

(51) Int Cl.$^7$: **G01F 1/66**

(21) Numéro de dépôt: **00403467.4**

(22) Date de dépôt: **11.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.12.1999 FR 9916607**

(71) Demandeur: **GAZ DE FRANCE**
**75017 Paris (FR)**

(72) Inventeurs:
• **Calliacoudas, Théophanis**
**75019 Paris (FR)**
• **Vulovic, Frédéric**
**91600 Savigny sur Orge (FR)**
• **Brassier, Pascale**
**40000 Mont de Marsan (FR)**
• **Hosten, Bernard**
**33410 Cestas (FR)**

(74) Mandataire: **Thévenet, Jean-Bruno et al**
**Cabinet Beau de Loménie**
**158, rue de l'Université**
**75340 Paris Cédex 07 (FR)**

(54) **Procédé et dispositif de mesure d'un débit de fluide circulant dans une canalisation**

(57)     Le débitmètre à ultrasons comprend au moins un premier transducteur ultrasonore (1) à fréquence d'excitation élevée et large bande passante disposé sur la paroi d'une canalisation (10) de transport de fluide au voisinage d'un premier point amont (A), au moins un deuxième transducteur ultrasonore (2) à fréquence d'excitation élevée et large bande passante disposé sur la paroi de la canalisation (10) au voisinage d'un deuxième point aval (B), des moyens (201) de numérisation des signaux ($S_A$, $S_B$) émis et des signaux ($R_A$, $R_B$) reçus par chacun des premier et deuxième transducteurs ultrasonores (1,2), des moyens (204 à 206) de traitement des signaux numérisés ($S_A$, $S_B$, $R_A$, $R_B$) pour déterminer directement par intercorrélation le temps ($t_{AB}$), de transit entre le premier point amont (A) et le deuxième point aval (B), le temps ($t_{BA}$) de transit entre le deuxième point aval (B) et le premier point amont (A) et la différence ($\tau$) de temps de transit ($t_{BA}$-$t_{AB}$), et des moyens de calcul (207 à 210) pour déterminer le débit de fluide à partir des mesures des temps de transit ($t_{AB}$, $t_{BA}$) et de la dif-férence ($\tau$) des temps de transit ($t_{BA}$-$t_{AB}$).

FIG.2

EP 1 113 247 A1

**Description**

La présente invention a pour objet un procédé et un dispositif de mesure d'un débit de fluide circulant dans une canalisation. L'invention s'applique à des fluides pouvant être en état gazeux ou liquide, mais est plus particulièrement adapté à la débitmètrie du gaz naturel.

On connaît déjà diverses techniques utilisant des ultrasons pour la mesure du débit d'un fluide. Ces techniques peuvent être réparties en trois familles comprenant les méthodes à effet Doppler, les méthodes à battement de fréquence et les méthodes à différence de temps de transit.

Les débitmètres à ultrasons sont toutefois souvent sensibles aux bruits perturbateurs de l'environnement du réseau de canalisation et les dysfonctionnements peuvent aller dans certains cas jusqu'à la perte du signal de mesure.

La présente invention vise à remédier aux inconvénients des dispositifs de mesure de débit de fluide de l'art antérieur et à fournir un procédé de mesure de débit qui soit essentiellement insensible aux bruits perturbateurs, tout en offrant une grande précision de mesure, et une grande commodité de mise en oeuvre et en assurant une facilité de maintenance des débitmètres mettant en oeuvre ce procédé.

Ces buts sont atteints grâce à un procédé de mesure d'un débit de fluide circulant dans une canalisation, selon lequel le débit est obtenu à partir de la détermination de la différence ($\tau$) des temps de transit ($t_{BA}$- $t_{AB}$) d'ondes ultrasonores circulant d'une part entre un premier point amont (A) de la canalisation et un deuxième point aval (B) de la canalisation et d'autre part entre le deuxième point aval (B) de la canalisation et le premier point amont (A) de la canalisation, caractérisé en ce qu'il consiste à installer un premier transducteur ultrasonore à fréquence d'excitation élevée et large bande passante, au voisinage dudit premier point amont (A) et un deuxième transducteur ultrasonore à fréquence d'excitation élevée et large bande passante, au voisinage dudit deuxième point aval (B), à numériser les signaux ($S_A$, $S_B$) émis et les signaux ($R_A$, $R_B$) reçus par chacun des premier et deuxième transducteurs ultrasonores, à déterminer directement par intercorrélation le temps ($t_{AB}$) de transit entre ledit premier point amont (A) et ledit deuxième point aval (B) à partir du signal numérisé émis par le premier transducteur et du signal numérisé reçu par le deuxième transducteur, à déterminer directement par intercorrélation le temps ($t_{BA}$) de transit entre ledit deuxième point aval (B) et ledit premier point amont (A) à partir du signal numérisé émis par le deuxième transducteur et du signal numérisé reçu par le premier transducteur, à déterminer directement par intercorrélation ladite différence ($\tau$) de temps de transit ($t_{BA}$-$t_{AB}$) à partir du signal numérisé ($R_A$) reçu par le premier transducteur et du signal numérisé ($R_B$) reçu par le deuxième transducteur, et à déterminer le débit de fluide à partir des mesures des temps de transit ($t_{AB}$, $t_{BA}$) et de la différence ($\tau$) des temps de transit ($t_{BA}$-$t_{AB}$) précédemment mesurés directement par intercorrélation.

Les premier et deuxième transducteurs présentent une fréquence de fonctionnement élevée, de préférence entre 250 et 500kHz de façon à se protéger des perturbations se situant dans les fréquences inférieures (bruit ultrasonore d'écoulement) et de celles qui se situent dans les fréquences supérieures (bruit électronique). Par exemple, une fréquence d'excitation à 400kHz avec une large bande passante de l'ordre de 30% (c'est-à-dire dans ce cas de 100 à 120kHz) constituent un bon choix de valeurs typiques.

Le procédé comprend une étape intermédiaire de calcul de la vitesse moyenne ($V_L$) du fluide à partir des mesures des temps de transit ($t_{AB}$, $t_{BA}$), de la différence ($\tau$) des temps de transit ($t_{BA}$-$t_{AB}$), et des caractéristiques géométriques des transducteurs et de la conduite, la vitesse moyenne calculée ($V_L$) permettant d'identifier et de prendre en compte dans le calcul du débit de fluide le régime d'écoulement du fluide.

Selon un aspect de l'invention, le procédé comprend une étape d'auto-étalonnage préalable avec un fluide de caractéristiques connues permettant d'effectuer une compensation des effets de pression, de température et de composition du gaz lors de la détermination du débit de fluide.

Avantageusement, lors du calcul par intercorrélation des temps de transit ($t_{AB}$ $t_{BA}$) et de la différence ($\tau$) des temps de transit ($t_{BA}$-$t_{AB}$), on procède à une interpolation polynomiale.

Selon une caractéristique particulière, on place les transducteurs en léger retrait de la zone d'écoulement du fluide circulant dans la canalisation.

De préférence, on procède à un calcul de la moyenne et de l'écart-type sur plusieurs mesures de débit successives et on compare l'écart-type à un seuil prédéterminé pour rejeter les mesures dont l'écart-type dépasse ledit seuil prédéterminé.

Selon un autre aspect de l'invention, on compare la vitesse du son dans la canalisation déterminée à partir des mesures des temps de transit ($t_{AB}$, $t_{BA}$) entre lesdits premier point amont (A) et deuxième point aval (B), et de la distance ($L_{AB}$) entre les premier et deuxième transducteurs ultrasonores selon la formule $C_o = \dfrac{2L_{AB}}{t_{AB} + t_{BA}}$ et la vitesse du son calculée de façon théorique à partir de la composition du fluide et de ses propriétés thermodynamiques, pour assurer une vérification de cohérence constituant une fonction d'auto diagnostic.

Selon un premier mode de réalisation, on dispose les premier et deuxième transducteurs sur un même côté de la canalisation de telle sorte que les ondes ultrasonores circulant entre les premier et deuxième transducteurs subissent une réflexion sur la partie de paroi de la canalisation opposée au côté sur lequel sont disposés les premier et deuxième transducteurs, les trajets des ondes ultrasonores définissant un premier plan de mesure.

Selon un deuxième mode de réalisation, on dispose les premier et deuxième transducteurs sur des parties de paroi opposées de la canalisation de telle sorte que le trajet des ondes ultrasonores forme un angle ($\varphi$) de 45° par rapport à l'axe de la canalisation, les trajets des ondes ultrasonores définissant un premier plan de mesure.

Dans ce cas, selon une variante de réalisation, on dispose en outre des troisième et quatrième transducteurs sur des parties de paroi opposées de la canalisation, de façon symétrique par rapport aux premier et deuxième transducteurs et de telle sorte que le trajet des ondes ultrasonores des troisième et quatrième transducteurs forme un angle $\varphi$ de 45° par rapport à l'axe de la canalisation et croise le trajet des ondes ultrasonores des premier et deuxième transducteurs, dans ledit premier plan de mesure, et on procède à des émissions simultanées de signaux ultrasonores émis d'une part par les premier et troisième transducteurs et d'autre part par des deuxième et quatrième transducteurs.

Selon une variante de réalisation, on dispose en outre des transducteurs additionnels selon une configuration identique à celle des premier et deuxième transducteurs ou à celle des premier et deuxième, troisième et quatrième transducteurs, mais avec des trajets d'ondes ultrasonores qui définissent au moins un deuxième plan de mesure distinct du premier plan de mesure.

Les différents plans de mesure ne passent pas nécessairement par l'axe de canalisation. Toutefois, selon un mode de réalisation avantageux, les premier et deuxième plans de mesure sont des plans orthogonaux passant par l'axe de la canalisation, ce qui donne lieu à des chemins acoustiques diamétraux.

L'invention concerne également un débitmètre à ultrasons mettant en oeuvre le procédé caractérisé en ce qu'il comprend au moins un premier transducteur ultrasonore à fréquence d'excitation élevée et large bande passante disposé sur la paroi d'une canalisation de transport de fluide au voisinage d'un premier point amont (A), au moins un deuxième transducteur ultrasonore à fréquence d'excitation élevée et large bande passante disposé sur la paroi de ladite canalisation au voisinage d'un deuxième point aval (B), des moyens de numérisation des signaux ($S_A$, $S_B$) émis et des signaux ($R_A$, $R_B$) reçus par chacun des premier et deuxième transducteurs ultrasonores, des moyens de traitement des signaux numérisés ($S_A$, $S_B$, $R_A$, $R_B$) pour déterminer directement par intercorrélation le temps ($t_{AB}$), de transit entre ledit premier point amont (A) et ledit deuxième point aval (B), le temps ($t_{BA}$) de transit entre ledit deuxième point aval (B) et ledit premier point amont (A) et la différence ($\tau$) de temps de transit ($t_{BA}-t_{AB}$), et des moyens de calcul pour déterminer le débit de fluide à partir des mesures des temps de transit ($t_{AB}$, $t_{BA}$) et de la différence ($\tau$) des temps de transit ($t_{BA}-t_{AB}$).

D'autres caractéristiques et avantages de l'invention ressortiront de la description suivante de modes particuliers de réalisation, donnés à titre d'exemples, en référence aux dessins annexés sur lesquels :

- la figure 1 est une vue schématique d'un débitmètre à deux cordes en V, selon un premier mode de réalisation de l'invention,
- la figure 2 est une vue schématique d'un débitmètre à une corde selon un deuxième mode de réalisation de l'invention,
- la figure 3 est une vue schématique d'un débitmètre à deux cordes croisées selon un troisième mode de réalisation de l'invention,
- la figure 4 est une vue schématique d'un débitmètre à quatre cordes croisées selon un quatrième mode de réalisation de l'invention,
- la figure 5 est une vue d'un tronçon de canalisation équipé d'un débitmètre selon le premier mode de réalisation de l'invention,
- la figure 6 est un organigramme montrant quatre possibilités différentes de réaliser un auto-étalonnage du débitmètre selon l'invention,
- la figure 7 est une vue schématique d'un dispositif d'auto étalonnage en ligne d'un débitmètre selon l'invention,
- la figure 8 est un organigramme illustrant la procédure d'étalonnage selon l'invention dans le cas particulier où le gaz de référence est constitué par de l'air et,
- la figure 9 est un organigramme illustrant le procédé de mesure du débit de fluide selon l'invention.

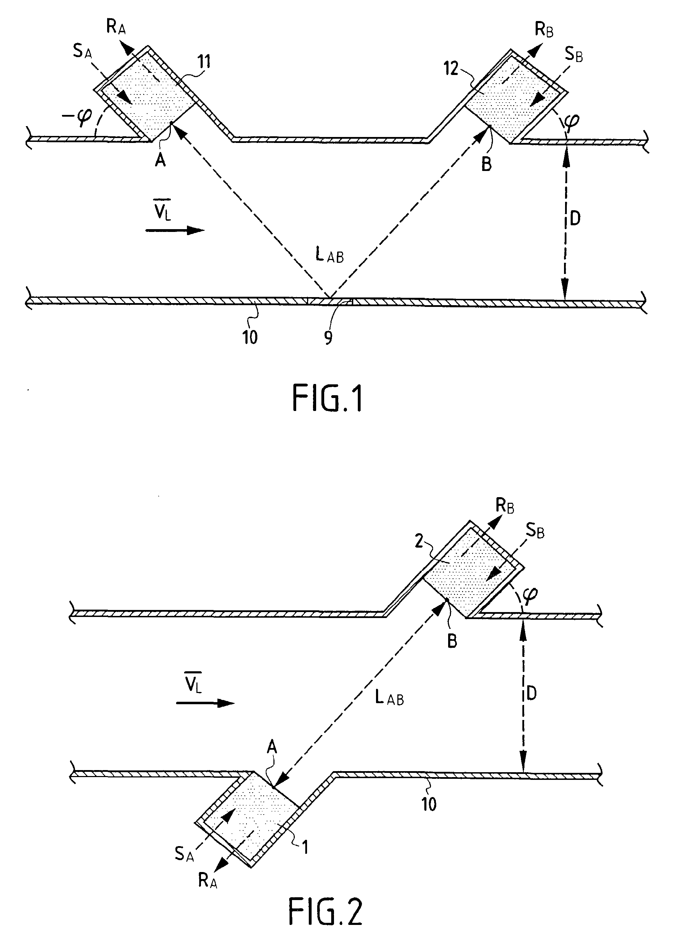

La figure 1 montre un premier exemple de réalisation d'un débitmètre à ultrasons conforme à l'invention, destiné à mesurer le débit d'un fluide circulant dans une conduite 10 présentant un diamètre interne D.

Pour mesurer le débit de fluide, des transducteurs ultrasonores 11,12 sont disposés sur la paroi de la conduite 10, au voisinage de points A et B écartés l'un de l'autre selon le sens d'écoulement du fluide dans la conduite 10.

Chaque transducteur ultrasonore 11,12 est situé dans une cavité débouchant dans la conduite 10 en léger retrait de la zone d'écoulement du fluide circulant dans la canalisation. Chaque transducteur 11,12 est placé sur un axe orienté suivant un angle $\varphi$ dont la valeur est de préférence égale à 45°, par rapport à l'axe de la conduite 10.

Le transducteur ultrasonore 11 émet une onde ultrasonore $R_A$ qui suit un trajet $L_{AB}$ du point A amont vers le point B aval où le transducteur ultrasonore 12 reçoit une onde ultrasonore $R_B$. Le transducteur ultrasonore 12 émet à son tour une onde ultrasonore $S_B$ qui suit le trajet $L_{AB}$ du point B aval vers le point A amont où le transducteur ultrasonore 11 reçoit une onde ultrasonore $R_B$.

Une onde ultrasonore est ainsi envoyée successivement dans le sens de l'écoulement de fluide et dans le sens contraire (en présentant une direction formant un angle $\varphi$ avec l'axe de l'écoulement dans la conduite 10). Chaque transducteur 11,12 joue ainsi successivement le rôle de l'émetteur et le rôle du récepteur.

La vitesse de l'onde ultrasonore émise par un transducteur 11 ou 12, se trouve respectivement accélérée ou retardée (phénomène d'advection) d'une quantité proportionnelle à la vitesse moyenne $V_L$ de l'écoulement dans la conduite.

Le débitmètre selon l'invention permet d'obtenir une mesure absolue du flux de fluide dans la conduite 10 à partir des mesures effectuées, d'une part sur les temps de vol $t_{AB}$ et $t_{BA}$ correspondant régulièrement aux trajets d'une onde ultrasonore le long du parcours $L_{AB}$ du point A au point B et du point B au point A, et d'autre part, sur la différence $\tau$ entre les temps de vol $t_{AB}$ et $t_{BA}$.

Le procédé selon l'invention tient par ailleurs compte des facteurs qui affectent la vitesse de l'onde en dehors de la vitesse de l'écoulement du fluide $V_L$, à saisir les paramètres liés à la conduite 10 (température, pression, diamètre D), la nature du fluide et ses propriétés physiques (viscosité dynamique, densité) et la nature de l'écoulement (laminaire, turbulent, pleinement développé).

Pour obtenir une mesure fiable des temps de vol $t_{AB}$ et $t_{BA}$ des ondes ultrasonores, on utilise la méthode d'intercorrélation entre les signaux reçus et le signal électrique d'émission. Cette méthode permet de réduire l'erreur de mesure à une valeur négligeable. Les signaux sont numérisés et le calcul des temps de vol peut s'effectuer à l'aide d'opérations classiques en traitement numérique du signal comme : transformée de Fourier, filtrage, convolution, corrélation....etc.

Il est rappelé que l'intercorrélation entre signaux est une mesure de ressemblance entre deux signaux. Elle est assimilable à une procédure qui décale le premier signal de façon à avoir un maximum de ressemblance avec le second signal. Cette procédure est connue sous le terme "Recherche du maximum de vraisemblance" ou "Maximum likelihood algorithm" dans la bibliographie internationale.

L'opération d'intercorrélation entre deux signaux x(t) et y(t) est donnée par l'expression suivante:

$$R_{xy}(\tau) = \lim \frac{1}{T}\int x(t+\tau)\,y(t)\,dt \qquad (1)$$

où T désigne le temps d'intégration.

$$T \to \infty$$

Dans sa version numérique, pour les signaux x, y échantillonnés à la fréquence $f_s$ la formule devient:

$$R_j = \frac{1}{N}\sum_{k=0}^{N-1} x_{k+j}y_k \quad (2)$$

où N est le nombre d'échantillons sur lequel la sommation est effectuée, $x_k$ et $y_k$ sont les échantillons des signaux x(t) et y(t) à l'instant $t = KT_s$, $T_s$ étant la période d'échantillonnage ($T_s = 1/f_s$).

La procédure de recherche du maximum de vraisemblance consiste à calculer la valeur de la corrélation R pour plusieurs valeurs de décalage j et de choisir la valeur j pour laquelle R prend sa valeur maximale. La valeur j ainsi choisie donne le retard $\tau$ recherché entre les deux signaux en termes de nombre de périodes d'échantillonnage ($\tau = jT_s$).

Ce décalage constitue la mesure qui devient indépendante des fluctuations de niveau des signaux provoquées par la turbulence, le bruit acoustique dans la conduite et le bruit électromagnétique de la chaîne d'acquisition.

Bien que classique, l'intercorrélation n'est pas utilisable pour des signaux dits à "bande étroite". Si par exemple le signal est continu, à fréquence fixe, le maximum de ressemblance peut se reproduire dans le temps pour un décalage à 1,2,... ou n périodes du signal. Ce phénomène est équivalent à l'ambiguïté de phase que l'on rencontre sur les systèmes classiques à mesure de déphasage entre les deux signaux. L'erreur induite est inacceptable et se produit en général pour les signaux à bande étroite, ce qui correspond à un contenu spectral étroit dans le domaine de fréquence ou, autrement dit, à un grand nombre d'oscillations dans le domaine du temps. Pour utiliser cette technique de traitement de signal, il faut employer des transducteurs ultrasonores à haute fréquence d'excitation et à large bande passante (leur réponse doit rester constante sur une large gamme de fréquences).

La technique des transducteurs à effet capacitif, par exemple, satisfait cette exigence et offre la possibilité de travailler à des fréquences élevées, mais des transducteurs basés sur une autre technologie, notamment celle de l'effet piézo-électrique, peuvent aussi être utilisés de façon avantageuse. Une bande passante d'environ 30% par rapport à la fréquence d'excitation est nécessaire. Par exemple, une excitation 400kHz nécessite une largeur de bande d'environ 120kHz. Ainsi, il est possible d'exciter les transducteurs avec une salve courte : Typiquement 3 impulsions dans une salve, pour produire des signaux sur lesquels il n'y a pas d'erreur de recherche du maximum de ressemblance.

Dans le système selon l'invention, l'utilisation de fréquences élevées permet de se placer au-dessus des bandes des fréquences du bruit acoustique (soit dans la bande audible, soit dans la bande ultrasonore), présent dans les conduites. La limite haute des fréquences du bruit engendré par les dispositifs de distribution, vannes, dispositifs de détente de gaz, montre la vulnérabilité des systèmes classiques aux perturbations d'origine acoustique. Le débitmètre selon l'invention travaille à des fréquences (typiquement 250 à 500kHz) au-dessus de la limite haute des fréquences du bruit engendré par les dispositifs de distribution (200Khz), en y associant un filtrage analogique et numérique pour éliminer tous les bruits résiduels. Le filtre du récepteur est choisi de manière à être en même temps suffisamment large pour éviter une distorsion importante du signal reçu, ce qui aurait des conséquences sur les résultats de l'inter-corrélation entre les signaux émis et reçu. En effet, en filtrant trop le signal reçu, celui-ci peut perdre sa ressemblance avec le signal émis et le maximum de la fonction d'intercorrélation ne sera pas très vif. Sa détection sera donc ambiguë.

Pour plus de précision, la différence entre les deux temps de vol $\tau = t_{BA} - t_{AB}$ est directement déduite de l'intercorrélation entre les deux signaux reçus représentant le passage de l'onde respectivement dans le sens et dans le sens contraire de l'écoulement.

Au contraire, dans la grande majorité des systèmes actuels, le temps de vol est calculé à partir de mesures de déphasage entre les signaux (émis et reçus) basés sur la détection de passage du signal à zéro ou à détection de seuil. Toutes ces méthodes sont sensibles au bruit.

Elles ne fonctionnent bien que pour des rapports signal/bruit relativement élevés. La fonction d'intercorrélation est plus robuste car, de par sa définition, elle opère par intégration sur toute la durée du signal. Elle récupère ainsi toute l'énergie contenue dans la bande passante du signal et, en même temps, elle applique une action "moyennage" ou "filtrage" du bruit. Quand ce dernier est non corrélé, son influence sur la mesure se trouve nettement atténuée. Par conséquent, à la sortie du corrélateur le rapport signal/bruit se trouve amélioré.

Dans le système selon la présente invention, on applique la méthode d'intercorrélation pour calculer non seulement les temps de vol $t_{AB}$ et $t_{BA}$, mais aussi pour le calcul direct de la différence de temps de vol $\tau$. Contrairement aux solutions existantes où $\tau$ est calculé à partir des temps de vol $t_{AB}$ et $t_{BA}$ ($\tau = t_{BA} - t_{AB}$), ici $\tau$ est mesuré directement. Par conséquent, la valeur du $\tau$ est indépendante des mesures des temps de vol $t_{AB}$ et $t_{BA}$ et l'erreur de mesure sur les temps de vol $t_{AB}$ et $t_{BA}$ ne se propage pas sur la différence de temps de vol $\tau$.

A cause de l'échantillonnage, le temps $\tau$ est mesuré à $\pm T_s/2$ près. La précision dépend alors du pas d'échantillonnage. Elle peut être encore améliorée sans augmenter la cadence d'échantillonnage, en effectuant une interpolation polynomiale au voisinage de la position du maximum. La meilleure solution est de calculer la dérivée de la fonction d'intercorrélation et de rechercher la position du passage à zéro. Le calcul de la dérivée est facile. Il suffit de faire une FFT (transformée de Fourier rapide), de multiplier par $2i\pi f$ et faire ensuite une FFT[1] (transformée inverse). Ces opérations peuvent être exécutées à l'aide d'un DSP (processeur numérique de signal). La position exacte du passage à zéro peut être estimée par interpolation linéaire entre les deux valeurs où l'on détecte un changement de signe du positif au négatif.

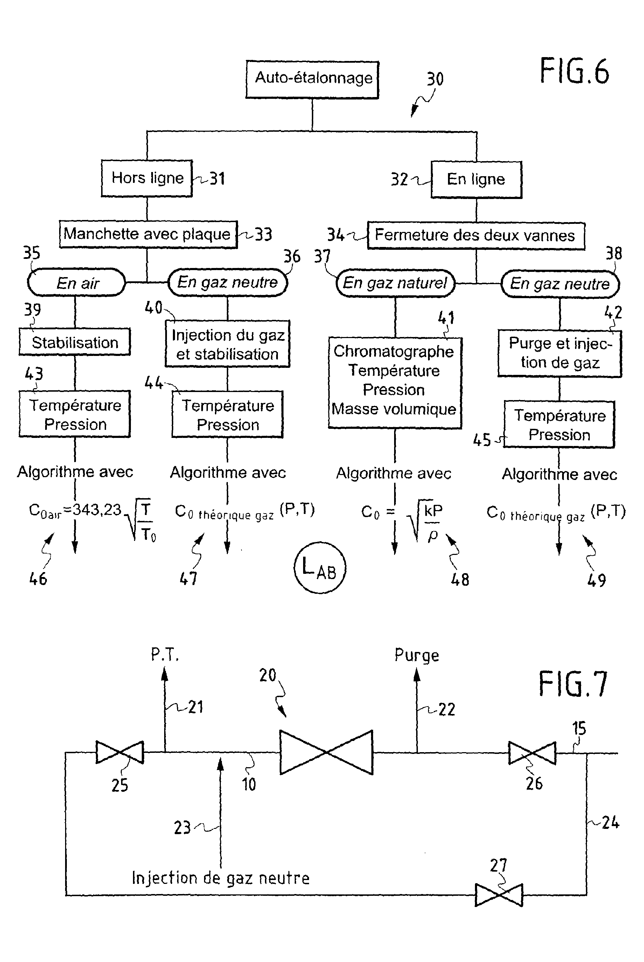

Dans le cas du mode de réalisation de la figure 1 qui est également montré en perspective sur la figure 5, avec un tronçon de canalisation de mesure 10 équipé de brides 13,14, les transducteurs ultrasonores 11,12 sont fixés sur le même côté de la paroi de la canalisation 10 et l'onde ultrasonore, dans son parcours d'un capteur à l'autre subit une réflexion sur la paroi opposée, définissant ainsi un trajet $L_{AB}$ à deux cordes en V. La contribution de la composante radiale et tangentielle sur la mesure s'élimine grâce au trajet en V de l'onde ultrasonore.

Ce mode de réalisation présente l'avantage de ne mettre en oeuvre que deux transducteurs de mesure facilement accessibles, car situés d'un même côté de la canalisation. Par ailleurs, la longueur du trajet $L_{AB}$ est la même dans les deux sens, ce qui simplifie les calculs.

Pour cette version de débitmètre à cordes en V, il est à noter que pour garantir une réflexion optimale des ondes ultrasonores issues de l'un des transducteurs vers l'autre, il est avantageux de placer une plaque 9 de réflexion sur la paroi opposée de la canalisation. Vu la directivité du faisceau produit par les transducteurs, il suffit que la plaque de réflexion 9 ait des dimensions du même ordre de grandeur que les sondes. Son utilisation n'est pas obligatoire mais sa présence permet une nette amélioration de l'énergie du signal captée par la sonde de réception. Elle ne doit pas pénétrer dans la veine d'écoulement du fluide, et doit de préférence affleurer la paroi interne (être tangente à la surface cylindrique de la canalisation). Divers exemples de réalisation sont possibles.

Selon un premier exemple, la plaque de réflexion est creusée à l'intérieur de la canalisation par usinage. Dans ce cas, sa section sera plutôt carrée. Cette réalisation taillée dans la masse constitue une solution robuste si le minimum d'épaisseur nécessaire est respecté compte tenu de la pression de la ligne.

Selon un deuxième exemple, la plaque de réflexion est constituée d'un bouchon cylindrique fileté de diamètre suffisant, c'est-à-dire, de l'ordre du centimètre ou de quelques centimètres, à peu près comme les sondes. Cette grosse vis à queue plate se fixe sur une ouverture filetée du tube du débitmètre centrée sur le point géométrique de la réflexion. Le réglage initial et définitif doit être fait de telle façon que cette vis affleure la surface interne de la canalisation sans pénétrer dans l'écoulement. Bien sûr sa fixation doit être très solide afin de tenir la pression et garantir une parfaite étanchéité. Au besoin, elle peut même être bloquée et soudée après le réglage.

Une fois que la distance $L_{AB}$ a été déterminée avec précision par étalonnage, cette distance peut être utilisée pour calculer la vitesse $\overline{V}_L$, c'est-à-dire la vitesse moyenne selon l'axe de la canalisation 10 sur le chemin acoustique $L_{AB}$ qui relie les transducteurs 11 et 12.

$$\overline{V_L} = \frac{tg\,\varphi\,L_{AB}^2}{4D} \quad \left(\frac{\tau}{t_{AB}t_{BA}}\right) \ (3)$$

où t exprime $t_{BA} - t_{AB}$

Dans cette formule, le diamètre de la conduite D et l'angle de direction de propagation avec l'axe de la conduite $\varphi$, sont des constantes fixées par construction et parfaitement connues. La longueur inter-transducteurs $L_{AB}$ est obtenue par étalonnage initial. Seuls les trois temps $\tau$, $t_{AB}$ et $t_{BA}$, obtenus par intercorrélation, sont mesurés à chaque instant pour suivre l'évolution du débit.

Par construction, les transducteurs à face plane ne peuvent être affleurants à l'écoulement sans pénétrer dans la conduite cylindrique. Il existe donc une cavité à débit supposé nul devant chacun des transducteurs. La formule précédente tient compte du retrait des transducteurs.

L'acquisition et le traitement numérique des signaux permettent le calcul en temps réel de la vitesse moyenne $\overline{V}_L$ qui donne le nombre de Reynolds Re pour définir le régime d'écoulement et le modèle de profil et calculer le débit réel dans la conduite. Le nombre de Reynolds est calculé en prenant en compte les propriétés physiques du gaz, comme la viscosité cinématique $\upsilon$

$$\Re e = \frac{D\overline{V}_L}{\upsilon} \quad (4)$$

avec $\upsilon = \mu/\rho$, $\mu$ étant la viscosité dynamique et $\rho$ la densité du gaz.

La vitesse $\overline{V}_L$ permet de calculer par intégration linéaire du profil de vitesse théorique choisi, la vitesse maximale sur l'axe, donnée par:

$$U_0 = \overline{V}_L \, (n+1)/\, n \quad (5).$$

Pour un écoulement parfaitement développé ($\Re_e > 2300$), le profil de vitesse est correctement représenté par une loi de type Nikuradse:

$$V(y) = U_0(1-y/R)^{1/n} \quad (6)$$

y décrivant la distance par rapport à l'axe de la canalisation, $0 \leq y < R$, R étant le rayon interne de la canalisation et n étant donné par

$$n = \frac{I}{0,25 - 0,023\log_{10}\left(\Re_e\right)}.$$

Le facteur de correction K reliant les données linéiques aux données surfaciques est défini par : $\overline{V}_S = K\overline{V}_L$ (7) où $\overline{V}_S$ est la vitesse moyenne spatiale de l'écoulement dans la section, appelée également vitesse débitante. Par intégration des données théoriques, le facteur de correction est calculé par : K = 2n/(2n+1) (8). Le débit moyen sur la section S est finalement calculé en temps réel par le logiciel de pilotage par la formule :

$$Q_s = SK \, \overline{V_L} = \frac{\pi D^2}{4} K \overline{V_L}. \qquad (9).$$

Le calcul ci-dessus peut être répété plusieurs fois à partir de plusieurs mesures. En moyennant les valeurs ainsi obtenues, on arrive à calculer un débit moyen pour l'écoulement du gaz dans la canalisation. En calculant l'écart type des valeurs mesurées on arrive à estimer la qualité de la mesure du débit. En intégrant alors dans le DSP le calcul de la moyenne et de l'écart type des mesures, ainsi qu'une logique de décision sur la pertinence des mesures, on obtient une fonction d'autodiagnostic du débitmètre.

Dans ce qui précède, on a envisagé en référence aux figures 1 et 5, le cas d'un débitmètre à deux cordes en V, comprenant deux sondes de mesures disposées sur le même côté de la canalisation avec une simple réflexion de l'onde sur la paroi opposée.

Comme représenté sur la figure 2, il est possible de mettre en oeuvre un débitmètre à simple corde comportant des premier et deuxième transducteurs ultrasonores 1,2 disposés sur deux côtés opposés de la canalisation 10, en étant décalés dans le sens de l'écoulement du fluide. Dans ce cas, les ondes ultrasonores parcourent un même trajet rectiligne $L_{AB}$ entre le point A et le point B pour les ondes ultrasonores émises par le transducteur 1 placé au voisinage du point A et entre le point B et le point A pour les ondes ultrasonores émises par le transducteur 2 placé au voisinage du point B.

Les transducteurs 1,2 peuvent être placés dans des cavités en retrait par rapport à l'écoulement dans la conduite 10, comme les transducteurs 11,12. La détermination de la distance $L_{AB}$ s'opère par étalonnage et le calcul de la vitesse moyenne $\overline{V}_L$ s'opère de la même façon à partir des temps de vol $t_{AB}$ et $t_{BA}$ et de la différence $\tau$ des temps de vol $t_{BA}$ et $t_{AB}$. mesurés à chaque instant pour suivre l'évolution du débit.

Compte tenu du trajet rectiligne direct $L_{AB}$ du mode de réalisation de la figure 2 qui diffère du trajet $L_{AB}$ en V du mode de réalisation de la figure 1, dans le cas d'un débitmètre à simple corde tel que celui illustré sur la figure 2, la vitesse moyenne $\overline{V}_L$ de l'écoulement du fluide entre les points A et B est donnée par la formule suivante :

$$\overline{V_L} = \frac{\mathrm{tg}\,\varphi L_{AB}^2}{2D} \left( \frac{\tau}{t_{AB} t_{BA}} \right) \quad (10)$$

Les tirs des ondes ultrasonores présentant les temps de vol $t_{AB}$ et $t_{BA}$ peuvent être réalisés soit successivement, soit simultanément. En effectuant des tirs simultanés, on évite certaines erreurs dues aux conditions fluctuantes (non stationnaires) de l'écoulement. Pour chacun des tirs simultanés, les signaux sont influencés par les mêmes conditions d'écoulement et l'effet des perturbations peut s'éliminer sur la différence entre les temps de propagation. De cette façon, on arrive à minimiser sur le résultat final une source d'erreur potentielle, celle des fluctuations de la célérité du son (dues par exemple à la turbulence) qui affecte le temps de propagation et la phase du signal. La simultanéité des tirs est possible grâce à la nature des signaux mis en oeuvre : signaux brefs haute fréquence (salves de courte durée, typiquement 3 cycles, ce qui correspond bien à des signaux de haute fréquence et à large bande). Avec la plupart des systèmes classiques, ce mode de fonctionnement ne serait pas réalisable.

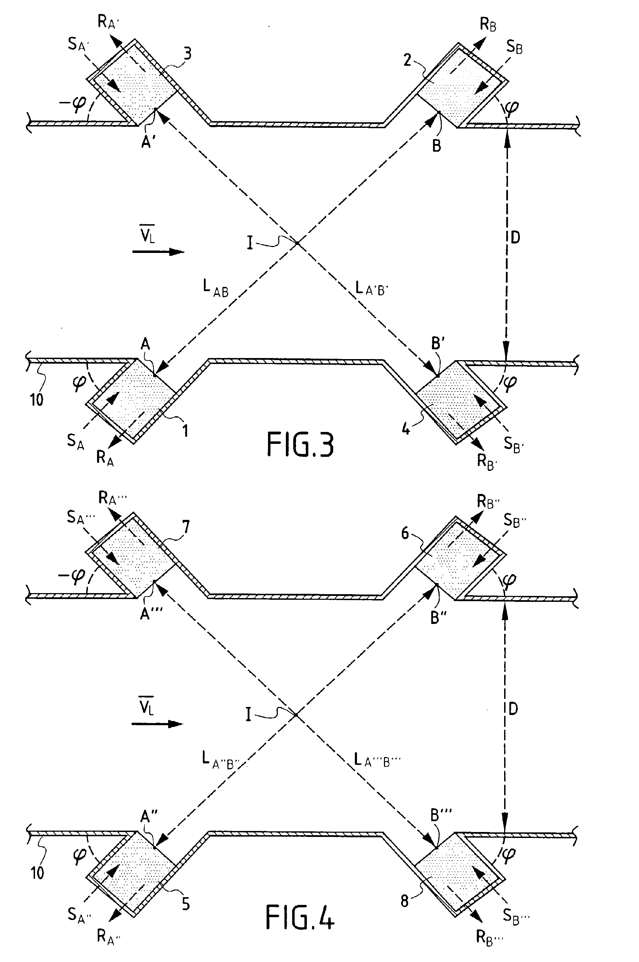

Le procédé de mesure de débit selon l'invention peut encore présenter d'autres variantes de réalisation. Par exemple, il est possible de réaliser un débitmètre à deux cordes croisées et quatre transducteurs, tel qu'illustré sur la figure 3. Ce débitmètre combine certains avantages des deux versions précédemment présentées ; en effet, il est aussi compact (en longueur) que la version simple corde à 2 transducteurs et en même temps permet de s'affranchir de la contribution indésirable de la composante transversale (radiale et/ou tangentielle) de la vitesse du fluide comme dans la version à 2 cordes en V. En plus, il donne la possibilité, si besoin est, de calculer la composante radiale de la vitesse d'écoulement.

Dans le cas du mode de réalisation de la figure 3, par rapport au mode de réalisation de la figure 2 à simple corde comprenant des transducteurs ultrasonores 1 et 2, il est mis en oeuvre une paire de transducteurs ultrasonores supplémentaires 3,4 disposés au voisinage de points A', B' symétriques par rapport aux points A et B par rapport à l'axe de la conduite 10. Les cordes $L_{AB}$ et $L_{A'B'}$. constituées par les trajets des ondes ultrasonores entre les points A et B et A' et B' respectivement, se situent dans un même plan. Le transducteur 3 peut émettre des ondes ultrasonores $S_{A'}$ vers le transducteur 4 ou recevoir des ondes ultrasonores $R_{B'}$ du transducteur 4.

De façon similaire, le transducteur 4 peut recevoir des ondes ultrasonores $R_{A'}$ du transducteur 3 ou émettre des ondes ultrasonores $S_{B'}$ vers le transducteur 3. On peut ainsi mesurer des temps de vol $t_{A'B'}$ et $t_{B'A'}$ entre les points A' et B' et entre les points B' et A' ainsi que la différence de temps de vol $\tau$ entre les deux chemins choisis parmi les quatre

D'une façon générale, on peut envisager deux modes de fonctionnement pour ce débitmètre à quatre sondes.

Dans le premier on n'utilise que trois mesures, issues de deux tirs simultanés sur des chemins croisés. Dans le second, on utilise six mesures (trois par corde), issues de quatre tirs (deux tirs simultanés sur chaque corde). Dans tous les cas, les tirs se font avantageusement, simultanément.

Si la vitesse d'écoulement présente localement une composante radiale, le fait d'ajouter une deuxième paire de transducteurs aux points A' et B' orientés selon une corde qui croise la première avec un angle d'inclinaison symétrique ($\varphi$' = -45° par rapport à l'axe de la conduite), permet de s'affranchir de l'influence de cette composante indésirable en combinant les trois mesures $t_{AB}$, $t_{B'A'}$, $\tau'$, $t_{BA}$, et $\tau$, $\tau$ exprimant la différence mesurée $t_{B'A'}$ - $t_{AB}$.

Cela revient au même si on avait opté pour la réalisation des mesures $t_{A'B'}$, $t_{BA}$ et $\tau$, $\tau$ exprimant cette fois-ci la différence mesurée $t_{BA}$-$t_{A'B'}$. Les deux jeux de mesures conduisent théoriquement au même résultat final.

En effet, avec le système à deux cordes le vecteur vitesse peut être mesuré sur le plan défini par les deux cordes croisées.

En établissant les formules de calcul du temps de propagation dans les deux sens sur chacune des cordes, on arrive à obtenir la vitesse axiale de l'écoulement, ainsi que la composante transversale (combinaison linéaire des deux composantes hors axe et tangentielle) de la vitesse du fluide. Par extension, en ajoutant une deuxième paire de cordes croisées (quatre transducteurs supplémentaires 5, 6, 7, 8 placés respectivement au voisinage de points A", B", A"', B"') comme la précédente mais sur le plan perpendiculaire à celui des deux premières cordes et qui passe par l'axe de la conduite, on peut aboutir à un système permettant de définir le vecteur vitesse sur les trois dimensions (voir la fig. 4 montrant la mise en oeuvre des transducteurs 5, 6, 7, 8 dans un plan perpendiculaire à celui de la fig. 3). Les transducteurs 5,6, peuvent émettre ou recevoir respectivement des signaux $S_{A"}$, $S_{B"}$ $R_{A"}$, $R_{B"}$ et les transducteurs 7, 8, émettre ou recevoir respectivement des signaux $S_A"'$, $S_B"'$, $R_A"'$, $R_B"'$.

De façon générale, un débitmètre selon l'invention, peut être multicordes et comprendre 2N transducteurs ultrasonores, N étant un nombre entier.

En particulier, les trois modes de réalisation décrits en référence aux fig. 1 à 3 et comprenant des transducteurs dont les trajets de mesure définissent un premier plan de mesure, peuvent être modifiés de façon extensive en comprenant plusieurs jeux de transducteurs disposés de façon similaire mais dans des plans de mesure différents.

Le mode de réalisation de la figure 1 avec cordes en V (deux transducteurs 11,12 disposés sur un même côté de la paroi), celui de la figure 2 du type monocorde rectiligne (deux transducteurs 1,2 disposés sur des parois opposées) ou celui de la figure 3 du type à cordes croisées (quatre transducteurs 1 à 4 répartis sur des parois opposées) peuvent tous être généralisés sur plusieurs plans différents, en particulier dans une version qui utilise deux plans de fonctionnement perpendiculaires et qui passent par l'axe de la canalisation. On dispose de variantes dont le nombre de transducteurs est doublé comme le mode de réalisation illustré sur les figures 3 et 4.

Pour mieux intégrer la vitesse sur la section de la canalisation, outre les plans orthogonaux symétriques, passant par l'axe de la canalisation, ce qui donne lieu à des chemins acoustiques diamétraux, il est possible de prévoir des couples de sondes dont les chemins acoustiques se situent sur des cordes ne passant pas par l'axe de la canalisation.

Il est également possible de combiner dans des plans différents d'un même dispositif de mesure des versions de base correspondant à plusieurs des modes de réalisation définis en référence aux figures 1 à 3. Ainsi, à titre d'exemple, si les transducteurs 5 à 8 de la figure 4 sont avantageusement combinés aux transducteurs 1 à 4 du mode de réalisation de la figure 3, en étant situés dans un plan différent de celui des transducteurs 1 à 4, ces transducteurs 5 à 8 pourraient aussi être combinés aux transducteurs 11 et 12 du mode de réalisation de la figure 1, en étant situés dans un plan différent de celui de ces transducteurs 11 et 12.

De façon plus particulière, un débitmètre à deux cordes croisées, tel que celui représenté sur la fig. 3, permet de générer les deux ondes ultrasonores $S_A$ et $S_A$' ou $S_B$ et $S_{B'}$ simultanément et donc dans les mêmes conditions de flux. On définit la composante de vitesse VR orthogonale à l'axe de la canalisation comme étant la composante radiale de la vitesse. Bien que cette composante ne contribue pas au flux, elle implique une différence entre les temps de propagation des ondes ultrasonores donc une erreur sur la mesure du flux. En milieu gazier, la composante radiale est souvent négligée.

A priori, avec une configuration de débitmètre à chemins acoustiques croisés, la contribution de la composante radiale sur les chemins acoustiques s'élimine dans la formule du débit et l'on retrouve bien :

$$\overline{V_L} = \frac{\operatorname{tg}\varphi L_{AB}^2}{2D}\left(\frac{t_{B'A'} - t_{AB}}{t_{AB}t_{B'A'}}\right) = \overline{V}_{L(\text{simplecorde})} \text{ avec } t = t_{B'A'}\text{-}t_{AB} \quad (11)$$

La condition essentielle pour que la composante VR soit éliminée est que les deux cordes se situent dans le même plan.

La formule précédente est valable quand les chemins acoustiques sont rigoureusement de la même longueur i.e. $L_{AB} = L_{A'B'}$. Si ce n'est pas le cas, la vitesse est calculée par la formule suivante :

$$\overline{V_L} = \frac{tg\varphi}{2D}\left(\frac{L_{AB}^2\left(t_{B'A'} - t_{AB}\right)}{t_{AB}t_{B'A'}} - \frac{t_{AB}}{t_{B'A'}}\cdot\frac{2\delta L_{AB} + \delta^2}{t_{AB} + t_{B'A'}}\right) = \overline{V}_{L(simplecorde)} - V_{correction} \quad (12)$$

où $\delta = L_{A'B'} - L_{AB}$ ($\delta>0$ ou $\delta<0$).

Avec $\delta = 0$, le terme de correction s'annule et on retrouve la formule (11).

Le système à deux cordes croisées, permet de calculer si besoin est, la composante transversale (qui est une combinaison linéaire des composantes hors axe i.e. radiale et tangentielle) de la vitesse. Par exemple, dans le cas particulier où la composante tangentielle est nulle, un chemin acoustique supplémentaire consistant à basculer le trajet AB en trajet BA ou le trajet B'A' en trajet A'B' permet d'accéder à la composante radiale $\overline{V_R}$ de l'écoulement selon une formule simple :

$$\overline{V_R} = \frac{\sin\varphi}{2}\left(\frac{L_{AB}}{t_{AB}} - \frac{L_{A'B'}}{t_{A'B'}}\right) \quad (13)$$

Dans les modes de réalisation décrits en référence aux fig. 1 et 2, qui constituent des débitmètres à deux cordes en V ou une corde rectiligne, les temps de propagation $t_{AB}$ $t_{BA}$ et la différence de temps de propagation $\tau$ sont calculés par intercorrélation des signaux $S_A$, $S_B$, $R_A$, $R_B$, délivrés ou reçus par les transducteurs 11,12 ou 1,2 de la façon suivante:

corr $(S_A, R_B) \rightarrow t_{AB}$
corr $(S_B, R_A) \rightarrow t_{BA}$
corr $(R_A, R_B)\ \tau$.

Pour le calcul du débit, dans le mode de réalisation décrit en référence à la figure 3 qui constitue un débitmètre comprenant au moins deux cordes croisées situées dans un même plan, les temps de propagation et les différences de temps de vol sont calculés par intercorrélation des signaux délivrés ou reçus par les transducteurs 1, 2, 3, 4 de la façon suivante:

corr $(S_A, R_B) \rightarrow t_{AB}$
corr $(S_{B'}, R_{A'}) \rightarrow t_{B'A'}$
corr $(R_B, R_{A'}) \rightarrow \tau$

ou encore, ce qui revient au même :

corr $(S_{A'}, R_{B'}) \rightarrow t_{A'B'}$
corr $(S_B, R_A) \rightarrow t_{BA}$
corr $(R_{B'}, R_A) \rightarrow \tau'$

On décrira maintenant en référence aux fig. 6 et 7, différentes possibilités pour réaliser un auto-étalonnage de compteurs ultrasonores selon l'invention, cet étalonnage résidant essentiellement dans la mesure de la distance intertransducteurs $L_{AB}$, $L_{A'B'}$, $L_{A''B''}$, $L_{A'''B'''}$ définissant le chemin parcouru par les ondes ultrasonores. L'étalonnage constitue ainsi une initialisation du compteur.

Si l'on considère par exemple le mode de réalisation de la fig. 2 pour lequel on doit déterminer la distance $L_{AB}$, l'initialisation peut s'effectuer selon plusieurs procédures différentes mais équivalentes. Elles suivent toutes le même algorithme général de calcul qui est le suivant :

1. Préparer le débitmètre à l'étalonnage c'est-à-dire choisir le protocole d'initialisation,
2 Mesurer la température et éventuellement la pression selon le protocole choisi,
3 Calculer de façon théorique la célérité du son dans le gaz considéré,

4 Mesurer le temps $t_{AB}$ par intercorrélation du premier signal de réception $R_B$ avec la référence adaptée $S_A$.

5 Mesurer le temps $t_{BA}$ par intercorrélation du deuxième signal de réception $R_A$ avec la même référence adaptée $S_B$.

6 Calculer la moyenne

$$t_0 = \frac{t_{AB} + t_{BA}}{2} \qquad (14)$$

7 Calculer la distance $L_{AB}$ entre les transducteurs A et B:

$$L_{AB} = C_{oGaz}\, t_o \qquad (15)$$

Un auto-étalonnage hors ligne est possible si le débitmètre ou compteur ultrasonore n'a pas encore été monté sur la canalisation.

Dans ce cas, la manchette du compteur ultrasonore, c'est-à-dire, le tronçon de conduite 10 équipé de transducteurs 11,12 et présentant des brides de raccordement 13,14 (fig. 5), obturées par des plaques est placé dans l'air, fluide dont on connaît très précisément les caractéristiques thermodynamiques. Une sonde de température permet d'évaluer très précisément la température de l'air. L'algorithme d'auto-étalonnage indiqué ci-dessus peut être exécuté après stabilisation de l'air dans la canalisation du compteur.

Dans ce cas, la loi donnant la vitesse du son dans l'air en fonction de la température s'écrit :

$$C_{oair} = 343{,}23\,\sqrt{\frac{T}{T_0}} = 343{,}23\,\sqrt{\frac{273{,}15 + T_{(°C)}}{293{,}15}}. \qquad (16)$$

Le même procédé peut être réalisé en montant la manchette du compteur avec des plaques d'obturation des brides et en injectant à l'intérieur un gaz de propriété thermodynamiques connues. Les mêmes acquisitions seront effectuées. Seule la loi donnant la célérité du son en fonction de la température et éventuellement de la pression sera différente. Les gaz utilisés pourront être par exemple de l'azote ou de l'hélium.

Un auto-étalonnage peut encore être effectué en ligne sans démontage du compteur ultrasonore par rapport à la canalisation sur laquelle ce compteur est monté. On a représenté sur la fig. 7 un compteur ultrasonore 20 selon l'invention comportant un tronçon de conduite ou manchette préalablement monté sur une ligne 15. Deux vannes 25,26 sont disposées respectivement en amont et en aval du compteur 20.

Une ligne 24 de by-pass pouvant être également équipée d'une vanne 27 est disposée en parallèle par rapport à l'ensemble des vannes 25,26 et du compteur 20 afin de permettre de continuer d'alimenter en gaz le réseau pendant la durée de l'auto-étalonnage où le compteur 20 est isolé du réseau par la fermeture des vannes 25, 26. Un conduit de purge 22 est branché entre le compteur 20 et la vanne aval 26 pour permettre d'évacuer le fluide résiduel, tel que du gaz naturel encore présent dans la portion de canalisation considérée entre les vannes 25 et 26.

Un piquage 23 est réalisé entre la vanne amont 25 et le compteur 20 pour permettre d'injecter un gaz de nature connue et très précise dans la portion de ligne isolée entre les vannes 25 et 26. Ce gaz de nature connue est de préférence un gaz neutre tel que de l'azote ou de l'hélium. Pour de petits diamètres de canalisation, par exemple DN 100, qui implique un faible volume à purger, le gaz de nature connue pourrait être de l'air, à condition de prendre toutes les précautions pour éviter un mélange explosif air-gaz lors de la purge ou du remplissage. Pour les gros diamètres de canalisation, ce risque de formation d'un mélange explosif air-gaz est plus grand et il convient d'éviter l'utilisation d'air comme fluide de référence. Dans tous les cas, une ligne 21 permet de fournir au dispositif d'auto-étalonnage des informations de température et de pression mesurées par des sondes au niveau du tronçon de canalisation entre ces vannes 25 et 26.

Selon encore un autre mode de réalisation, l'auto-étalonnage peut être effectué en ligne sans purge ni injection de gaz neutre ou d'air, en utilisant du gaz naturel à pression et température connues. Dans ce cas, il convient toutefois de pouvoir connaître avec précision la composition du gaz , par exemple avec un analyseur de type chromatographe et un compteur de masse volumique doit également être prévu.

La formule théorique donnant la vitesse ultrasonore dans le gaz est la suivante:

$$C_0 = \sqrt{\frac{kP}{\rho}} \qquad (17)$$

**10**

avec un exposant isentropique du gaz réel (k ≠ g = $\frac{C_P}{C_V}$),

P : pression absolue au niveau du compteur ($P_a$),

ρ : masse volumique du gaz (kg/m$^3$).

L'exposant isentropique en fonction des conditions thermodynamiques du gaz peut être obtenu grâce au logiciel GASPACK. Un module du programme permet, à partir de l'équation d'état AGA - 8 (GRI - Oklahoma University), de calculer les caractéristiques thermodynamiques suivantes:

- chaleur spécifique à pression constante $C_p$,

- chaleur spécifique à volume constant $C_v$,

- Rapport des chaleurs spécifiques : $\gamma = C_p/C_v$

- Exposants isentropiques : K et K'. On rappelle que pour un gaz parfait, on a :

$$\gamma = \kappa = '.$$

Dans le domaine de pression et de température P<100 bar absolu et - 50<T<80°C, la précision annoncée de la méthode est en général meilleure que 0,1% ce qui assure une faible incertitude sur la distance intertransducteurs.
Les calculs sont effectués en utilisant soit une équation d'état, soit une table thermodynamique. Ces méthodes de calcul peuvent être directement implémentées dans le logiciel gérant l'auto-étalonnage du compteur ultrasonore.
Les différentes conditions possibles d'auto-étalonnage 30 sont résumées sur le diagramme de la fig. 6.
Ainsi l'auto-étalonnage peut être un étalonnage hors ligne (condition 31) impliquant l'utilisation d'une manchette avec plaques (condition 33) ou un étalonnage en ligne (condition 32) impliquant la fermeture des deux vannes 25, 26 de la fig.7 (condition 34).
Dans le cas d'un étalonnage hors ligne, le fluide de référence utilisé peut être de préférence l'air (condition 35) ou un gaz neutre tel que l'azote (condition 36).
Dans le cas d'un fluide de référence constitué par de l'air, il convient d'attendre une stabilisation (condition 39), de mesurer la température et éventuellement la pression de cet air (condition 43) et de calculer la célérité du son dans l'air au repos selon la formule

$$C_{oair} = 343,23 \sqrt{\frac{T}{T_0}}$$

(condition 46), où T est la température de l'air mesuré en kelvin et $T_o$ est une température ambiante de 293,15K.
Dans le cas d'un fluide de référence constitué par un gaz neutre, il convient d'injecter ce gaz neutre et d'attendre une stabilisation (condition 40), de mesurer la température et la pression de ce gaz neutre (condition 44) et de calculer la célérité du son dans le gaz neutre au repos à partir de la valeur de célérité $C_o$ théorique pour ce gaz et en fonction de valeurs mesurées de température et de pression (condition 47).
Dans le cas d'un étalonnage en ligne, le fluide de référence utilisé peut être du gaz naturel (condition 37) ou un gaz neutre tel que l'azote (condition 38) pouvant dans le cas de canalisation de faible section être éventuellement remplacé par de l'air.
Dans le cas d'un fluide de référence constitué par du gaz naturel, il convient de déterminer la composition du gaz par exemple à l'aide d'un chromatographe et de mesurer la température, la pression et la masse volumique de ce gaz (condition 41). Le calcul de la célérité du son dans le gaz (condition 48) s'effectue alors à partir d'une formule du type

$$C_0 = \sqrt{\frac{\kappa P}{\rho}}$$

(voir plus haut la formule 17).
Dans le cas d'un fluide de référence constitué par un gaz neutre, il convient de purger le compteur et d'injecter ce gaz neutre (condition 42), de mesurer la température et la pression de ce gaz neutre (condition 45) et de calculer la célérité du son dans le gaz neutre à partir de la célérité théorique pour ce gaz et en fonction des valeurs mesurées de température et de pression (condition 49).

Dans toutes les variantes du procédé d'étalonnage, une fois déterminée la célérité du son dans le gaz de référence considéré, on procède aux mesures et calculs définis plus haut aux étapes 4 à 7 de détermination de la distance $L_{AB}$ entre les transducteurs disposés aux points A et B, selon la formule (15).

On notera que les méthodes d'auto étalonnage sont justes si la cellule de mesure est maintenue à une température aussi stable que possible. Il importe donc que le débitmètre à ultrasons ainsi que les tubes annexes remplis de gaz de référence soient correctement calorifugés.

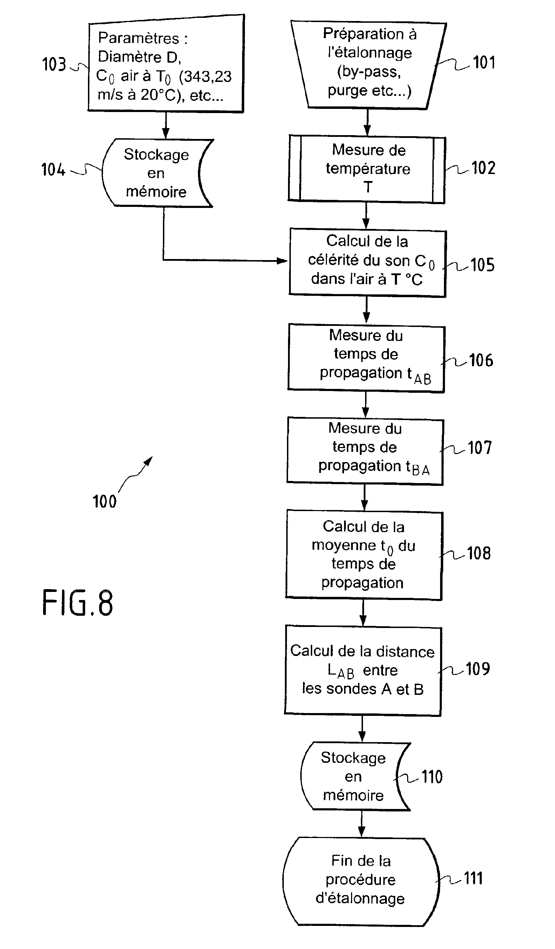

La fig.8 est un organigramme qui résume différentes étapes d'un procédé d'étalonnage en ligne appliqué à une canalisation de compteur de relativement faible diamètre et utilisant de l'air ambiant comme fluide de référence.

Dans une étape 101, on procède à une préparation du débitmètre à l'étalonnage en effectuant les opérations suivantes :

    a) by-pass de la canalisation du compteur afin de ne pas couper l'alimentation du réseau en gaz,
    b) purge de la canalisation du compteur,
    c) stabilisation de l'air dans la canalisation du compteur (air au repos).

Dans une étape 102, on procède à une mesure de la température T dans l'air au repos.

Dans des étapes préalables 103,104, on a pris en compte et stocké en mémoire différents paramètres : diamètre D de la canalisation, célérité du son dans l'air à la température ambiante $T_o$ ($C_{oair}$ = 343,23m/s à 20°C).

Dans une étape 105, on procède au calcul de la célérité du son dans l'air au repos selon la formule:

$$C_{0air} = 343,23 \sqrt{\frac{273,15 + T_{(°C)}}{293,15}} \tag{16}$$

Dans une étape 106, on procède à la mesure du temps de propagation $t_{AB}$ par intercorrélation des signaux $S_A$ et $R_B$.

Dans une étape 107, on procède à la mesure du temps de propagation $t_{BA}$ par intercorrélation des signaux $S_B$ et $R_A$.

Dans une étape 108, on procède au calcul de la moyenne $t_o$ du temps de propagation avec

$$t_o = \frac{t_{AB} + t_{BA}}{2}$$

Dans une étape 109, on procède au calcul de la distance $L_{AB}$ entre les points A et B au voisinage desquels sont placés les transducteurs ultrasonores, avec $L_{AB} = C_{oair}t_o$.

Dans une étape 110, on procède au stockage en mémoire de la distance calculée $L_{AB}$, qui peut être connue avec une grande précision (mieux que 1‰).

Après répétition éventuelle du processus pour d'autres couples de points A', B' ou A", B" correspondant à d'autres couples de transducteurs, il est mis fin à la procédure d'étalonnage à l'étape 111.

La distance $L_{AB}$ entre les transducteurs ne varie qu'après maintenance ou remplacement des transducteurs de sorte qu'il n'est nécessaire de procéder à un nouvel étalonnage qu'après une intervention au niveau des sondes incorporant les transducteurs. On notera que les transducteurs ou les sondes les incorporant sont accessibles par l'extérieur de la conduite et ne nécessitent pas le démontage de la manchette du compteur. Comme on l'a vu plus haut, l'étalonnage peut également être effectué en ligne, sans démontage du compteur.

On notera que la mise en oeuvre de transducteurs 1 à 8, 11,12 disposés dans des cavités en retrait de la vanne d'écoulement et n'affleurant pas trop les parois internés présentent divers avantages. En particulier, les transducteurs ultrasonores ne perturbent pratiquement pas l'écoulement du fluide, n'introduisent pas de perte de charge du fait de l'absence d'élément d'obstruction et permettent éventuellement le passage d'un piston racleur pour le nettoyage et la maintenance de la ligne.

Le procédé et le système de mesure de débit selon l'invention autorisent par ailleurs un auto-diagnostic qui peut comprendre une vérification consistant à comparer la vitesse du son obtenue grâce au compteur ultrasonore et celle que l'on peut calculer théoriquement à partir des propriétés thermodynamiques et de la composition du gaz.

Ainsi la célérité du son dans la canalisation peut être calculée :

    . théoriquement à partir de la composition du gaz et de ses propriétés thermodynamiques,
    . à partir des mesures du temps de vol dans les deux sens $t_{AB}$, $t_{BA}$ sur la même corde AB et en connaissant avec précision la distance inter-transducteurs $L_{AB}$ selon la formule:

$$C_O = \frac{2L_{AB}}{t_{AB} + t_{BA}} \qquad (18)$$

$L_{AB}$ est déjà connue car elle a été mesurée lors de l'auto-étalonnage. Cette formule simple est exacte à débit nul et constitue une bonne approximation à débit non nul. L'approximation tient à la condition que la vitesse moyenne de l'écoulement soit très inférieure à la vitesse de propagation du son. Même dans le cas le plus défavorable, i.e. vitesse d'écoulement élevée et faible pression (donc vitesse du son réduite), la précision est bien meilleure que 0.5%. Ceci étant, la mesure peut se faire même quand la canalisation débite et le résultat, comparé avec la valeur théorique calculée (ou fournie), peut servir pour vérifier le bon fonctionnement du système. Une éventuelle incohérence avec la valeur théorique peut être utilisée par exemple, pour déclencher une alarme.

Une autre possibilité d'auto-contrôle réside dans un examen systématique de l'écart type observé sur le débit mesuré. Dans ce cas, le critère d'acceptation ou de rejet (entraînant par exemple l'émission d'une alarme) de la mesure est le dépassement d'un seuil d'écart type prédéfini. Ce seuil dépend de l'écoulement établi dans la canalisation. Pour un poste de comptage dont la configuration engendre un taux de turbulence élevé, on peut accepter un écart type relativement élevé (par exemple 8 à 10% plutôt que 2 à 3%). La fiabilité de la valeur moyenne du débit peut en tous les cas être améliorée en augmentant le nombre de mesures.

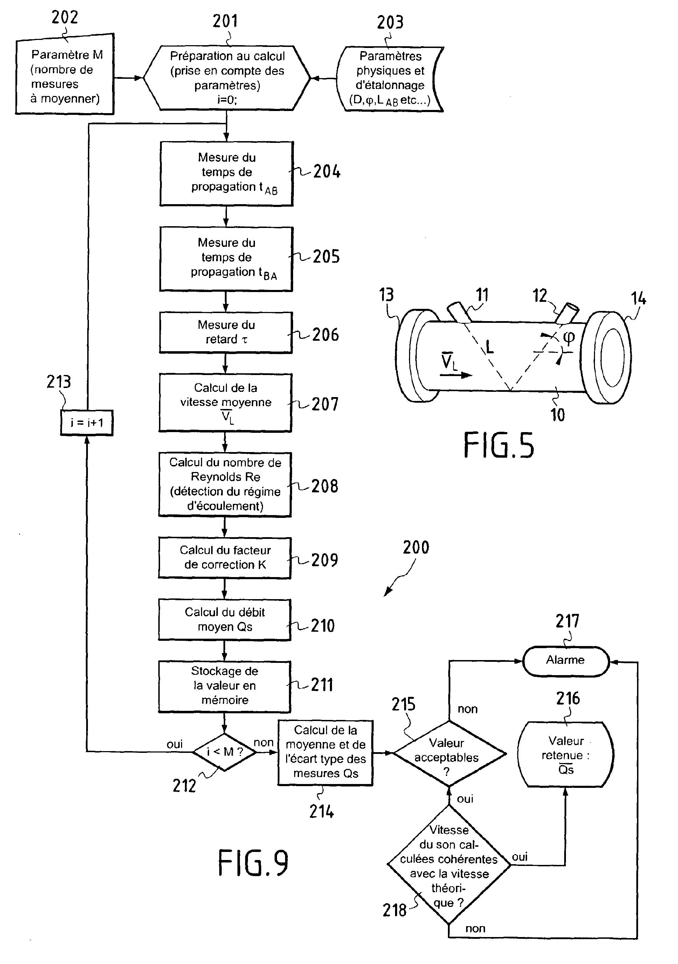

La fig. 9 est un organigramme qui résume différentes étapes d'un exemple de procédé 200 de mesure de débit de fluide selon l'invention.

Dans une première étape 201, on procède à la préparation au calcul par la prise en compte de paramètres physiques et d'étalonnage (tels que diamètre D, angle φ, longueur $L_{AB}$) préalablement déterminés dans une étape 203, on initialise le compteur du nombre de mesures à moyenner (i = o), le paramètre M du nombre total de mesures à moyenner ayant été défini au préalable dans une étape 202.

Dans une étape 204, on mesure le temps de propagation $t_{AB}$ par intercorrélation des signaux $S_A$ et $R_B$.

Dans une étape 205, on mesure le temps de propagation $t_{BA}$ par intercorrélation des signaux $S_B$ et $R_A$.

Dans une étape 206, on mesure le retard $\tau$ par intercorrélation des signaux $R_A$ et $R_B$.

Dans une étape 207, on calcule la vitesse moyenne $V_L$ du fluide selon une formule (3) ou (10) qui dépend du positionnement des transducteurs aux points de mesure A et B, comme indiqué plus haut.

Dans une étape 208, on calcule le nombre de Reynolds $\Re e$ à partir de la vitesse moyenne $V_L$ afin de définir le régime d'écoulement.

Dans une étape 209, on calcule le facteur de correction K, à partir du nombre de Reynolds $\Re e$, puis de n, comme indiqué plus haut en référence aux équations (4) à (8).

Dans une étape 210, on calcule le débit moyen $Q_s$ selon la formule (9).

Dans une étape 211, on stocke en mémoire la valeur calculée du débit moyen.

Dans une étape 212 on effectue un test pour déterminer si les étapes 204 à 211 ont été répétées un nombre de fois égal au nombre M de mesures à moyenner. Si ce n'est pas le cas, dans une étape 213, on procède à une itération du nombre de mesures (i=i+1) et on procède à nouveau aux étapes 204 à 211. Si en revanche, on atteint le nombre M de mesures à moyenner, on procède au calcul de la moyenne et de l'écart type (étape 214) des mesures du débit moyen $Q_s$ précédemment stockées en mémoire à chaque étape 211.

Dans une étape 215, on effectue un test de pertinence de la mesure si la valeur moyenne du débit moyen $Q_s$ et l'écart type sont des valeurs acceptables par rapport à des valeurs théoriques de référence données (test d'auto-diagnostic). Si c'est le cas, on peut afficher à l'étape 216 la valeur retenue pour le débit moyen $Q_s$ ou on peut passer à une étape supplémentaire 218 d'auto-diagnostic. Si ce n'est pas le cas, on déclenche à l'étape 217 une alarme signalant l'incohérence des mesures.

L'étape supplémentaire 218 d'auto-diagnostic peut consister en une comparaison entre la vitesse du son déterminée par le débitmètre en appliquant la formule (18) et la vitesse du son calculée théoriquement à partir des propriétés thermodynamiques et la composition du gaz. En cas d'incohérence entre ces valeurs comparées, on passe à l'étape 217 de déclenchement d'une alarme. Sinon on passe à l'étape 216 d'affichage de la valeur du débit moyen $Q_S$.

Naturellement le procédé de mesure de débit et le débitmètre selon l'invention peuvent présenter diverses autres variantes de réalisation sans sortir du cadre de l'invention.

Dans ce qui précède, on a décrit plus particulièrement un procédé de mesure de débit d'un fluide gazeux, tel que du gaz naturel et le débitmètre selon l'invention est bien adapté aux contraintes du grand comptage (transport de gaz , comptage industriel, comptage frontalier, stockage, soutirage) et peut être utilisé avec des pressions par exemple de l'ordre d'une dizaine de bar ou même supérieures et pouvant aller jusqu'à plusieurs dizaines de bar si la tenue mécanique du matériel est choisie en conséquence. Le débitmètre à ultrasons selon l'invention est toutefois également applicable au comptage de liquides par ex, dans le domaine pétrolier.

**Revendications**

1. Procédé de mesure d'un débit de fluide circulant dans une canalisation (10), selon lequel le débit est obtenu à partir de la détermination de la différence ($\tau$) des temps de transit ($t_{BA}$- $t_{AB}$) d'ondes ultrasonores circulant d'une part entre un premier point amont (A) de la canalisation et un deuxième point aval (B) de la canalisation et d'autre part entre le deuxième point aval (B) de la canalisation et le premier point amont (A) de la canalisation, caractérisé en ce qu'il consiste à installer un premier transducteur ultrasonore (1;11) à fréquence d'excitation élevée et large bande passante, au voisinage dudit premier point amont (A) et un deuxième transducteur ultrasonore (2;12) à fréquence d'excitation élevée et large bande passante, au voisinage dudit deuxième point aval (B), à numériser les signaux ($S_A$, $S_B$) émis et les signaux ($R_A$, $R_B$) reçus par chacun des premier et deuxième transducteurs ultrasonores (1,2; 11,12), à déterminer directement par intercorrélation le temps ($t_{AB}$) de transit entre ledit premier point amont (A) et ledit deuxième point aval (B) à partir du signal numérisé émis par le premier transducteur (1;11) et du signal numérisé reçu par le deuxième transducteur (2;12), à déterminer directement par intercorrélation le temps ($t_{BA}$) de transit entre ledit deuxième point aval (B) et ledit premier point amont (A) à partir du signal numérisé émis par le deuxième transducteur (2;12) et du signal numérisé reçu par le premier transducteur (1;11), à déterminer directement par intercorrélation ladite différence ($\tau$) de temps de transit ($t_{BA}$-$t_{AB}$) à partir du signal numérisé ($R_A$) reçu par le premier transducteur (1;11) et du signal numérisé ($R_B$) reçu par le deuxième transducteur (2;12), et à déterminer le débit de fluide à partir des mesures des temps de transit ($t_{AB}$, $t_{BA}$) et de la différence ($\tau$) des temps de transit ($t_{BA}$-$t_{AB}$) précédemment mesurés directement par intercorrélation.

2. Procédé de mesure selon la revendication 1, caractérisé en ce que les premier et deuxième transducteurs (1,2; 11,12) présentent une fréquence de fonctionnement élevée comprise entre 250 et 500kHz et une large bande passante de l'ordre de 30%.

3. Procédé selon la revendication 1 ou la revendication 2, caractérisé en ce qu'il comprend une étape intermédiaire de calcul de la vitesse moyenne ($V_L$) du fluide à partir des mesures des temps de transit ($t_{AB}$, $t_{BA}$), de la différence ($\tau$) des temps de transit ($t_{BA}$-$t_{AB}$), et des caractéristiques géométriques des transducteurs (1,2; 11,12) et de la conduite (10), la vitesse moyenne calculée ($V_L$) permettant d'identifier et de prendre en compte dans le calcul du débit de fluide le régime d'écoulement du fluide.

4. Procédé selon l'une quelconque des revendications 1 à 3, caractérisé en ce qu'il comprend une étape d'auto-étalonnage préalable avec un fluide de caractéristiques connues permettant d'effectuer une compensation des effets de pression, de température et de composition du gaz lors de la détermination du débit de fluide.

5. Procédé selon l'une quelconque des revendications 1 à 4, caractérisé en ce que lors du calcul par intercorrélation des temps de transit ($t_{AB}$, $t_{BA}$) et de la différence ($\tau$) des temps de transit ($t_{BA}$-$t_{AB}$), on procède à une interpolation polynomiale.

6. Procédé selon l'une quelconque des revendications 1 à 5, caractérisé en ce que l'on place les transducteurs (1,2; 11,12) en léger retrait de la zone d'écoulement du fluide circulant dans la canalisation.

7. Procédé selon l'une quelconque des revendications 1 à 6, caractérisé en ce que l'on procède à un calcul de la moyenne et de l'écart-type sur plusieurs mesures de débit successives et en ce que l'on compare l'écart-type à un seuil prédéterminé pour rejeter les mesures dont l'écart-type dépasse ledit seuil prédéterminé.

8. Procédé selon l'une quelconque des revendication 6 à 7, caractérisé en ce que l'on compare la vitesse du son dans la canalisation déterminée à partir des mesures des temps de transit ($t_{AB}$, $t_{BA}$) entre lesdits premier point amont (A) et deuxième point aval (B), et de la distance ($L_{AB}$), entre les premier et deuxième transducteurs ultrasonores (1,2 ; 11,12) selon la formule $C_O = \dfrac{2L_{AB}}{t_{AB} + t_{BA}}$ et la vitesse du son calculée de façon théorique à partir de la composition du fluide et de ses propriétés thermodynamiques, pour assurer une vérification de cohérence constituant une fonction d'auto-diagnostic.

9. Procédé selon l'une quelconque des revendications 1 à 8, caractérisé en ce que l'on dispose les premier et deuxième transducteurs (11,12) sur un même côté de la canalisation (10) de telle sorte que les ondes ultrasonores circulant entre les premier et deuxième transducteurs (11,12) subissent une réflexion sur la partie de paroi de la canalisation (10) opposée au côté sur lequel sont disposés les premier et deuxième transducteurs (11,12), le trajet des ondes ultrasonores définissant un premier plan de mesure.

**10.** Procédé selon l'une quelconque des revendications 1 à 8, caractérisé en ce que l'on dispose les premier et deuxième transducteurs (1,2) sur des parties de paroi opposées de la canalisation (10) de telle sorte que le trajet des ondes ultrasonores forme un angle ($\varphi$) de 45° par rapport à l'axe de la canalisation (10), le trajet des ondes ultrasonores définissant un premier plan de mesure.

**11.** Procédé selon la revendication 10, caractérisé en ce que l'on dispose en outre des troisième et quatrième transducteurs (3,4) sur des parties de paroi opposées de la canalisation (10), de façon symétrique par rapport aux premier et deuxième transducteurs (1,2) et de telle sorte que le trajet des ondes ultrasonores des troisième et quatrième transducteurs (3,4)forme un angle $\varphi$ de 45° par rapport à l'axe de la canalisation (10) et croise le trajet des ondes ultrasonores des premier et deuxième transducteurs (1,2) dans ledit premier plan de mesure, et en ce que l'on procède à des émissions simultanées de signaux ultrasonores émis d'une part par les premier et troisième transducteurs (1,3) et d'autre part par des deuxième et quatrième transducteurs (2,4).

**12.** Procédé selon l'une quelconque des revendication 9 et 10,
caractérisé en ce que l'on dépose en outre des transducteurs additionnels selon une configuration identique à celle des premier et deuxième transducteurs (11,12 ou 1,2) mais avec des trajets d'ondes ultrasonores qui définissent au moins un deuxième plan de mesure distinct du premier plan de mesure.

**13.** Procédé selon la revendication 11, car en ce que l'on dispose en outre des transducteurs additionnels selon une configuration identique à celle des premier, deuxième, troisième et quatrième transducteurs (1,2,3,4), mais avec des trajets d'ondes ultrasonores qui définissent au moins un deuxième plan de mesure distinct du premier plan de mesure.

**14.** Procédé selon la revendication 12 ou la revendication 13,
caractérisé en ce que les premier et deuxième plans de mesure sont des plans orthogonaux passant par l'axe de la canalisation.

**15.** Débitmètre à ultrasons mettant en oeuvre le procédé selon l'une quelconque des revendications 1 à 14, caractérisé en ce qu'il comprend au moins un premier transducteur ultrasonore (1,11) à fréquence d'excitation élevée et large bande passante disposé sur la paroi d'une canalisation (10) de transport de fluide au voisinage d'un premier point amont (A), au moins un deuxième transducteur ultrasonore (2,12) à fréquence d'excitation élevée et large bande passante disposé sur la paroi de ladite canalisation (10) au voisinage d'un deuxième point aval (B), des moyens (201) de numérisation des signaux ($S_A$, $S_B$) émis et des signaux ($R_A$, $R_B$) reçus par chacun des premier et deuxième transducteurs ultrasonores (1,2 ; 11,12), des moyens (204 à 206) de traitement des signaux numérisés ($S_A$, $S_B$, $R_A$, $R_B$) pour déterminer directement par intercorrélation le temps ($t_{AB}$), de transit entre ledit premier point amont (A) et ledit deuxième point aval (B), le temps ($t_{BA}$) de transit entre ledit deuxième point aval (B) et ledit premier point amont (A) et la différence ($\tau$) de temps de transit ($t_{BA}$-$t_{AB}$), et des moyens de calcul (207 à 210) pour déterminer le débit de fluide à partir des mesures des temps de transit ($t_{AB}$, $t_{BA}$) et de la différence ($\tau$) des temps de transit ($t_{BA}$-$t_{AB}$).

FIG.1

FIG.2

FIG.3

FIG.4

FIG.6

Auto-étalonnage — 30

Hors ligne — 31    32 — En ligne

Manchette avec plaque — 33    34 — Fermeture des deux vannes

35 *En air*    *En gaz neutre* — 36    37 *En gaz naturel*    *En gaz neutre* — 38

39 Stabilisation    40 Injection du gaz et stabilisation    41 Chromatographe Température Pression Masse volumique    42 Purge et injection de gaz

43 Température Pression    44 Température Pression    45 Température Pression

Algorithme avec    Algorithme avec    Algorithme avec    Algorithme avec

$C_{0air} = 343,23 \sqrt{\dfrac{T}{T_0}}$    $C_{0 \text{ théorique gaz}} (P,T)$    $C_0 = \sqrt{\dfrac{kP}{\rho}}$    $C_{0 \text{ théorique gaz}} (P,T)$

46    47    $L_{AB}$    48    49

FIG.7

P.T. — 21    20    Purge — 22    15

25    10    26

23 — Injection de gaz neutre    24

27

**FIG.8**

- 103 — Paramètres : Diamètre D, $C_0$ air à $T_0$ (343,23 m/s à 20°C), etc...
- 104 — Stockage en mémoire
- 101 — Préparation à l'étalonnage (by-pass, purge etc...)
- 102 — Mesure de température T
- 105 — Calcul de la célérité du son $C_0$ dans l'air à T °C
- 106 — Mesure du temps de propagation $t_{AB}$
- 107 — Mesure du temps de propagation $t_{BA}$
- 108 — Calcul de la moyenne $t_0$ du temps de propagation
- 109 — Calcul de la distance $L_{AB}$ entre les sondes A et B
- 110 — Stockage en mémoire
- 111 — Fin de la procédure d'étalonnage
- 100

202
Paramètre M
(nombre de
mesures
à moyenner)

201
Préparation au calcul
(prise en compte des
paramètres)
i=0;

203
Paramètres
physiques et
d'étalonnage
$(D, \varphi, L_{AB} \text{ etc...})$

204
Mesure du
temps de
propagation $t_{AB}$

205
Mesure du
temps de
propagation $t_{BA}$

206
Mesure du
retard $\tau$

207
Calcul de la
vitesse moyenne
$\overline{V_L}$

213
i = i+1

208
Calcul du nombre de
Reynolds Re
(détection du régime
d'écoulement)

209
Calcul du facteur
de correction K

210
Calcul du débit
moyen Qs

211
Stockage de
la valeur en
mémoire

200

13   11   12   14

$\overline{V_L}$   L   $\varphi$

10

FIG.5

212
oui   i < M ?   non

214
Calcul de la
moyenne et de
l'écart type des
mesures Qs

215
Valeur
acceptables
?

non

217
Alarme

216
Valeur
retenue :
$\overline{Qs}$

oui

218
Vitesse
du son calculées cohérentes
avec la vitesse
théorique ?

oui

non

FIG.9

**Office européen des brevets**

**RAPPORT DE RECHERCHE EUROPEENNE**

Numéro de la demande

EP 00 40 3467

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 019 038 A (CRITTEN DONALD LOUIS ET AL) 19 avril 1977 (1977-04-19) * colonne 3, ligne 30 - colonne 4, ligne 24; figure 2 * | 1,15 | G01F1/66 |
| Y | | 4 | |
| Y | US 4 754 650 A (SMALLING JACK W ET AL) 5 juillet 1988 (1988-07-05) * colonne 8, ligne 14 - ligne 36 * | 4 | |
| A | EP 0 537 735 A (ORE INTERNATIONAL INC) 21 avril 1993 (1993-04-21) * colonne 7, ligne 30 - colonne 10, ligne 3; figures 5-7 * | 1,3,5,6, 11 | |
| A | FR 2 450 456 A (GUERMONPREZ ET FILS SARL DENIS) 26 septembre 1980 (1980-09-26) * page 3, ligne 6 - page 5, ligne 37; figure * | 1 | |

DOMAINES TECHNIQUES RECHERCHES (Int.Cl.7)

G01F

Le présent rapport a été établi pour toutes les revendications

| Lieu de la recherche | Date d'achèvement de la recherche | Examinateur |
|---|---|---|
| LA HAYE | 24 avril 2001 | Heinsius, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE**
**RELATIF A LA DEMANDE DE BREVET EUROPEEN NO.**          EP 00 40 3467

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2001

| Document brevet cité au rapport de recherche | | Date de publication | Membre(s) de la famille de brevet(s) | | Date de publication |
|---|---|---|---|---|---|
| US 4019038 | A | 19-04-1977 | GB | 1398381 A | 18-06-1975 |
| | | | CA | 967679 A | 13-05-1975 |
| | | | SE | 393390 B | 09-05-1977 |
| US 4754650 | A | 05-07-1988 | US | 4596133 A | 24-06-1986 |
| | | | US | 4856321 A | 15-08-1989 |
| | | | DE | 3428058 A | 28-03-1985 |
| | | | DE | 3448533 C | 17-10-1996 |
| | | | FR | 2569270 A | 21-02-1986 |
| | | | GB | 2146122 A,B | 11-04-1985 |
| | | | IT | 1179744 B | 16-09-1987 |
| | | | JP | 1864158 C | 08-08-1994 |
| | | | JP | 5076580 B | 22-10-1993 |
| | | | JP | 60115825 A | 22-06-1985 |
| EP 0537735 | A | 21-04-1993 | US | 5228347 A | 20-07-1993 |
| FR 2450456 | A | 26-09-1980 | AUCUN | | |

EPO FORM P0460